# EUROPEAN PATENT SPECIFICATION

(11) **EP 3 202 860 B1**
(45) Date of publication and mention of the grant of the patent: **07.10.2020**
(21) Application number: 16153845.9
(22) Date of filing: 02.02.2016
(51) Int. Cl.: C09D 4/00

(54) **METHOD FOR APPLYING AN ABSORBING POLYMER ON A SUBSTRATE, SUBSTRATE PROVIDED WITH A COATING OF AN ABSORBING POLYMER AND USE OF THE SUBSTRATE**
VERFAHREN ZUM AUFBRINGEN EINES ABSORBIERENDEN POLYMERS AUF EINEM SUBSTRAT, SUBSTRAT MIT EINER BESCHICHTUNG AUS EINEM ABSORBIERENDEN POLYMER SOWIE VERWENDUNG DES SUBSTRATES
PROCÉDÉ D'APPLICATION D'UN POLYMÈRE ABSORBANT SUR UN SUBSTRAT, SUBSTRAT POURVU D'UN REVÊTEMENT D'UN POLYMÈRE ABSORBANT ET UTILISATION DE CE SUBSTRAT

(43) Date of publication of application: 09.08.2017
(73) Proprietor: Holland Plug International B.V., 2491 BW The Hague (NL)
(72) Inventor: TEEPEN, Robert Marie, 6082 AR Buggenum (NL)
(74) Representative: Arnold & Siedsma

(56) References cited:
- EP-A1- 1 522 545
- WO-A1-2004/084784
- KR-A- 20120 039 284
- US-A- 4 738 867
- US-A1- 2003 135 172

## Description

The invention according to claims 1 to 9 relates to a method for applying an absorbing polymer on a substrate, comprising the steps of:
- providing a substrate;
- applying a reaction mixture comprising a monomer and a radical-forming photoinitiator of polymerization on the substrate; and
- causing radical formation in the reaction mixture and thereby initiating the polymerization of the monomer under the influence of light, wherein the application of the reaction mixture is performed by spraying; and wherein the reaction mixture is atomized during spraying; wherein, after polymerization, the sprayed reaction mixture will be able to swell and absorb liquids further comprising the step of evacuating excess reaction mixture during application of the reaction mixture to the substrate.

In various applications, such as for sanitary applications, it may be desirable to use materials which are able to absorb relatively large amounts of liquids. Such materials are known and are commonly applied in the form of granules or particles. These granules are able to swell and thereby absorb large amounts of liquids, when a liquid reaches the surface area of the granules.

In order to apply these granules in an end product, it is necessary to fix the granules at a desired position withing the product, since the granules will otherwise move or maybe even agglomerate, thereby forming gel blocks, reducing their functionality. Currently available techniques such as hot melt-based techniques, the application of multi-part adhesives, such as disclosed in European patent EP 1522545 , also reduce the swellability of the granules, since they close off or reduce the active surface area of the granules. As a consequence, a larger number of granules is needed in order to obtain a required absorption capacity. However, as the granules are arranged closer to each other, the capacity per granule will be further reduced since the surface areas of individual granules touches each other.
US4738867 describes a process for the preparation of water absorptive composite material. In the process unpolymerized acrylate is polymerized by means of irradiation with electromagnetic radiation or corpuscular ionizing radiation.
US2003135172 describes a storage layer which is obtained by a process including (a) forming a sprayable blend containing one or more superabsorbent forming monomers, superabsorbent polymer particles and water; and one or more initiators; (b) applying the sprayable blend to a fibrous web; and (c) subjecting the sprayed fibrous web to conditions under which the superabsorbent forming monomer polymerizes.
KR20120039284 describes a manufacturing method of a super absorbent resin to improve a conversion rate and polymerization of a monomer mixture having fine particle size. WO2004084784 describes an absorbent article such as a diaper, an incontinence guard, a sanitary napkin or the like, whereby the article exhibits a liquid permeable upper surface and comprises an absorbent structure, which in the longitudinal direction exhibits a crotch portion and two end portions, wherein the absorbent structure comprises an acquisition layer and at least one first storage layer absorbent.
EP1522545 describes a method for applying a coating of super-absorbent polymers to a carrier, comprising of impregnating the carrier with a reaction mixture comprising at least a first monomer neutralized with an inorganic base and a second monomer and a radical-forming polymerization initiator, and causing the monomers to polymerize on the carrier under the influence of an energy source wherein radical formation occurs and the polymerization is started.

It is now an object of the invention to alleviate or even obviate the above stated drawbacks.

This object is achieved according to the invention with a method according to the preamble, which is characterized in that the application of the reaction mixture is performed by spraying.

Instead of the use of dipping, as disclosed in European patent EP 1522545, the reaction mixture is applied by spraying the reaction mixture using a nozzle. By using spraying as the way of application, the reaction mixture will be dispersed, causing the reaction mixture to be present in much smaller particles after polymerization. As a consequence, the application is easier to control. The resulting layer will be present on the substrate as particles instead of a film. Such an appeareance will increase the active surface area available for absorption.

After spraying the reaction mixture on the substrate, the monomers will be polymerized by the application of light which has a spectrum comprising at least wavelengths for which the photoinitiator (normally present in an amount of approximately 1.5 percent by weight of the reaction mixture) will start the formation of radicals. After polymerization, the sprayed reaction mixture will be able to swell and absorb liquids.

A photoinitiator sensitive for ultraviolet light may for beneficially be used in combination with ultraviolet light. Ultraviolet light is also present in visible light.

It is also found that, droplets of reaction mixture will tend to be repelled from each other, especially when the particle concentration on the substrate is low.

In an embodiment of the method according to the invention, the reaction mixture is atomized during spraying.

When the reaction mixture is atomized or nebulized during spraying, this will further decrease the size of the droplets of the reaction mixture, and increase the active surface area even further.

In another embodiment of the method according to the invention, the method further comprises the step of evacuating excess reaction mixture during application of the reaction mixture to the substrate.

The evacuation of excess reaction mixture during application helps to finely disperse the reaction mixture on the substrate. Such evacuation is preferably performed by venting, for instance in a covered hood, e.g. by venting around the spraying nozzle.

Such evacuation may benefically also be arranged in a similar way in the equipment for polymerizing the applied reaction mixture.

In a preferred embodiment of the method according to the invention, the monomer comprises an acrylic acid or a component with an acrylic acid group.

Monomers based on acrylacid acid may advantageously used for the absorption of liquids, and aqueous liquids in particular.

In a further preferred embodiment of the method according to the invention, the monomer comprises:
a first monomer, which is a monomer containing an acrylic acid group with the formula H₂C=CR₁R₂ , wherein R₁ = H or an alkyl group with 1-10 carbon atoms, and R₂ = COOH, which monomer is neutralized with an inorganic base before polymerization; and
a second monomer, which is a compound selected from a) a monomer containing an acrylic acid group and having the formula H₂C=CR₃R₄, wherein R₃ = H or an alkyl group with 1-10 carbon atoms and R₄ is an alkyl carboxyl group with 1-10 carbon atoms and not equal to R₂, b) a monomer containing an acrylamide group and having the formula H₂C=CR₃CONHR₅, wherein R₃ is as defined above and R₅ is an alkyl group with 1-10 carbon atoms, c) a compound selected from the group consisting of N,N-dimethyl acrylamide, deacetone acrylamide, methoxy (polyethyleneglycol)-methacrylate, ammonium sulphate ethyl methacrylate, vinyl acetate, N-vinyl-2-pyrrolidone, N-vinyl-N-methylacetamide, vinyl cynaide, crotonic acid, 3-amino-crotonamide, 4-hydroxybutyl acrylate, 4-hydroxybutyl methacrylate, hydroxypropyl acrylate, hydroxypropyl methacrylate, hydroxyethyl acrylate and hydroxyethyl methacrylate.

Such a monomer is known from European patent EP 1522545. Such a monomer, and more preferably any of the monomers in the preferred embodiments in this patent EP 1522545, herewith enclosed by reference, may be used for application in the method according to the invention, since they show a large capacity of absorption of liquids.

In yet another embodiment of the method according to the invention, the method comprises the step of applying granules of a liquid absorbing polymer on the substrate before, during or after the application of the reaction mixture on the substrate.

Granules will typically show a larger degree of swelling compared to droplets of reaction mixture, when applied on the substrate. It is thus beneficial to combine granules with the reaction mixture as sprayed, such that the granules will be embedded in a matrix of the sprayed reaction mixture. The application of the granules at a certain area of the substrate preferably does not occur at the same time as the application of liquid reaction by spraying.

In a first example of a combined method, which is especially suitable for producing substrates for sanitary napkins, the granules are strewed after the application of the liquid reaction mixture and after that, the resulting mixture is polymerized.

In a second example of a combined method, which is especially suitable for producing diapers, the granules are first applied to the substrate, after which the reaction mixture is sprayed onto and/or around these granules. Subsequently, the mixture is polymerized.

In a further preferred embodiment of the method according to the invention, the granules are made from the reaction mixture.

In this case, the granules are embedded in a matrix of the same material, thereby reducing or preventing strains in the materials due to differences in the abilities to swell between the granules and the matrix.

In even another embodiment of the method according to the invention, the application of the reaction mixture by spraying occurs by the application of a nozzle with a constant flow and beam thickness.

The use of a nozzle which delivers a beam directed towards the surface of the substrate with a constant flow and beam thickness (e.g. 30-50 mm in width) will improve the appearance of the absorbent material on the substrate.

In again another preferred embodiment of the method according to the invention, the substrate is selected from the list of blotting-paper, airlaid paper, a non-woven or woven cloth, such as for instance jute.

These substrates are found to be particularly suitable for application of the reaction mixture by spraying. These cloths may for instance be made from polypropylene (PP), polypropylene ethylene (PP-PPE) or polylactic acid (PLA).

In yet another embodiment of the method according to the invention, the substrate is provided by feeding the substrate from an entrance spool towards and onto an exit spool, arranged at a distance from the entrance spool, and wherein the absorbing polymer is applied to the substrate between and at a distance from the entrance and the exit spool.

While other techniques may also be used, it is recommended to apply the polymer on the substrate by using an entrance or first spool, which feeds a sheet of the substrate towards and onto an exit or second spool, arranged at a distance from the first spool, wherein the equipment for applying the reaction mixture and for polymerizing the reaction mixture after application, as well as other possible treatment equipment for the substrate, are arranged between the entrance and the exit spool. This will increase the speed of operation, and the substrate may be easily transported between facilites on the spool, either before and after application of the absorbing material on the substrate.

The invention further relates to a substrate according to claim 10 provided with a coating of an absorbing polymer obtainable with the method according to the invention.

The invention further relates to a use of a substrate according to the invention, wherein the carrier is applied as absorption material in incontinence products, such as diapers, sanitary napkins or absorbing towels such as kitchen rolls.

Such substrates may however also be used in post surgical compression garments, mattress protectors and products for agriculture and horticulture.

These and other features of the invention are further elucidated with reference to the accompanying drawing.

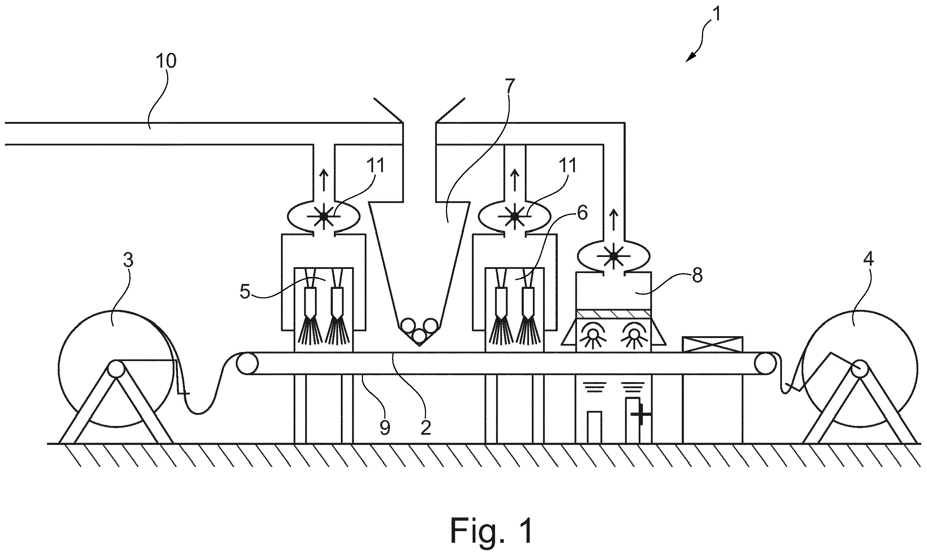

Figure 1 shows a set-up for applying a method according to the invention.

Figure 1 shows a set-up 1 for performing a method according to the invention. A substrate 2 is fed from an entrance spool 3 towards and onto an exit spool 4. In between, a reaction mixture is sprayed onto the surface of the substrate, in either or both of the spraying heads 5, 6. In between the spraying heads 5, 6, a head 7 is arranged for strewing absorbing particles or granules on the substrate. Each of the heads 5, 6, 7 may be switched on and off seperately or removed altogether independent from each other.

Further downstream from the heads 5, 6, 7, an irradiation head is 8 is arranged, for polymerizing or curing the reaction mixture which has been applied on the substrate 2 upstream at head 5 or head 6.

After this step, the substrate 2 is rolled on the exit spool 4, which may conveniently be removed for transport, especially when entrance spool 3 runs out of feed. A new roll may then be supplied on entrance spool 3 as well.

The movement of the substrate 2 between entrance spool 3 and exit spool 4 is in this case assisted by a conveyor belt 9, arranged between the spools 3, 4.

Each of the heads 5, 6, 7 is connected to a venting tube 10, with fans 11, for venting the excess reaction mixture from the substrate 2.

## Claims

1. Method for applying an absorbing polymer on a substrate, comprising the steps of:
- providing a substrate;
- applying a reaction mixture comprising a monomer and a radical-forming photoinitiator of polymerization on the substrate; and
- causing radical formation in the reaction mixture and thereby initiating the polymerization of the monomer under the influence of light,
wherein the application of the reaction mixture is performed by spraying; and wherein the reaction mixture is atomized during spraying;
wherein, after polymerization, the sprayed reaction mixture will be able to swell and absorb liquids further comprising the step of evacuating excess reaction mixture during application of the reaction mixture to the substrate.

2. Method according to claim 1, wherein the light for causing radical formation in the reaction mixture and initiating the polymerization of the monomer is ultraviolet light.

3. Method according to claim 1 or 2, wherein the monomer comprises an acrylic acid or a component with an acrylic acid group.

4. Method according to claim 3, wherein the monomer comprises:
- a first monomer, which is a monomer containing an acrylic acid group with the formula H₂C=CR₁R₂, wherein R₁ = H or an alkyl group with 1-10 carbon atoms, and R₂ = COOH, which monomer is neutralized with an inorganic base before polymerization; and
- a second monomer, which is a compound selected from a) a monomer containing an acrylic acid group and having the formula H₂C=CR₃R₄, wherein R₃ = H or an alkyl group with 1- 10 carbon atoms and R₄ is an alkyl carboxyl group with 1-10 carbon atoms and not equal to R₂, b) a monomer containing an acrylamide group and having the formula H₂C=CR₃CONHR₅, wherein R₃ is as defined above and R₅ is an alkyl group with 1-10 carbon atoms, c) a compound selected from the group consisting of N,N-dimethyl acrylamide, deacetone acrylamide, methoxy (polyethyleneglycol)-methacrylate, ammonium sulphate ethyl methacrylate, vinyl acetate, N-vinyl-2-pyrrolidone, N-vinyl-N-methylacetamide, vinyl cyanide, crotonic acid, 3-amino-crotonamide, 4-hydroxybutyl acrylate, 4-hydroxybutyl methacrylate, hydroxypropyl acrylate, hydroxypropyl methacrylate, hydroxyethyl acrylate and hydroxyethyl methacrylate.

5. Method according to any of the preceding claims, comprising the step of applying granules of a liquid absorbing polymer on the substrate before, during or after the application of the reaction mixture on the substrate.

6. Method according to claim 5, wherein the granules are made from the reaction mixture.

7. Method according to any of the preceding claims, wherein the application of the reaction mixture by spraying occurs by the application of a nozzle with a constant flow and beam thickness.

8. Method according to any of the preceding claims, wherein the substrate is selected from the list of blotting-paper, airlaid paper, a non-woven or woven cloth.

9. Method according to any of the preceding claims, wherein the substrate is provided by feeding the substrate from an entrance spool towards and onto an exit spool, arranged at a distance from the entrance spool, and wherein the absorbing polymer is applied to the substrate between and at a distance from the entrance and the exit spool.

10. Substrate provided with a coating of an absorbing polymer obtainable with the method as claimed in any of the preceding claims, wherein the substrate is selected from the list of blotting-paper, airlaid paper, a non-woven or woven cloth.

11. Use of a substrate as claimed in claim 10, wherein the carrier is applied as absorption material in incontinence products, such as diapers, sanitary napkins or absorbing towels such as kitchen rolls.

12. Use of a substrate as claimed in claim 10, wherein the substrate is used in products for agriculture and horticulture.

## Patentansprüche

1. Verfahren zum Aufbringen eines absorbierenden Polymers auf ein Substrat, welches die Schritte umfasst:
- Bereitstellen eines Substrats;
- Aufbringen einer Reaktionsmischung, welche ein Monomer und einen radikalbildenden Photoinitiator der Polymerisation auf dem Substrat umfasst; und
- Bewirken einer Bildung von Radikalen in der Reaktionsmischung und dadurch Initiieren der Polymerisation des Monomer unter dem Einfluss von Licht,
wobei das Aufbringen von der Reaktionsmischung durch Sprühen durchgeführt wird; und wobei die Reaktionsmischung während des Sprühens zerstäubt wird; wobei, nach der Polymerisation, die aufgesprühte Reaktionsmischung in der Lage sein wird, aufzuquellen und Flüssigkeiten zu absorbieren, weiterhin den Schritt des Evakuierens von überschüssiger Reaktionsmischung während des Aufbringen der Reaktionsmischung auf das Substrat umfassend.

2. Verfahren gemäß Anspruch 1, wobei das Licht zum Bewirken der Bildung von Radikalen in der Reaktionsmischung und Initiieren der Polymerisation des Monomers ultraviolettes Licht ist.

3. Verfahren gemäß Anspruch 1 oder 2, wobei das Monomer eine Acrylsäure oder eine Komponente mit einer Acrylsäuregruppe umfasst.

4. Verfahren gemäß Anspruch 3, wobei das Monomer umfasst:
- ein erstes Monomer, welches ein Monomer ist, welches eine Acrylsäuregruppe mit der Formel H₂C = CR₁R₂ enthält, wobei R₁ = H ist oder eine Alkylgruppe mit 1 - 10 Kohlenstoffatomen, und wobei R₂ = COOH ist, wobei das Monomer mit einer anorganischen Base vor der Polymerisation neutralisiert wird; und
- ein zweites Monomer, welches eine Verbindung ausgewählt ist aus a) einem Monomer, welches eine Acrylsäuregruppe enthält, und welches die Formel H₂C = CR₃R₄ aufweist, wobei R₃ = H ist oder eine Alkylgruppe mit 1 - 10 Kohlenstoffatomen, und wobei R₄ eine Alkylcarboxylgruppe mit 1 - 10 Kohlenstoffatomen ist und nicht gleich zu R₂ ist, b) einem Monomer, welches eine Acrylamidgruppe enthält, und welches die Formel H₂C = CR₃COHNHR₅ aufweist, wobei R₃ wie oben definiert ist ist, und wobei R₅ eine Alkylgruppe mit 1 - 10 Kohlenstoffatomen ist, c) eine Verbindung ausgewählt aus der Gruppe bestehend aus N,N-Dimethyl-Acrylamid, Deactetonacrylamid, Methoxy(Polyethyleneglycol)-Methacrylat, Ammoniumsulfat-Ethylmethacrylat, Vinylacetat, N-Vinyl-2-Pyrrolidon, N-Vinyl-N-Methylacetamid, Vinylcyanid, Crotonsäure, 3-Amino-Crontonamid, 4-Hydroxybutylacrylat, 4-Hydroxybutylmethacrylat, Hydroxypropylacrylat, Hydroxypropylmethacrylat, Hydroxyethylacrylat und Hydroxyethylmethacrylat.

5. Verfahren gemäß irgendeinem der vorhergehenden Ansprüche, welches den Schritt des Aufbringen von Körnchen aus einem Flüssigkeit absorbierenden Polymer auf das Substrat vor, während und nach dem Aufbringen von der Reaktionsmischung auf das Substrat umfasst.

6. Verfahren gemäß Anspruch 5, wobei die Körnchen aus der Reaktionsmischung hergestellt sind.

7. Verfahren gemäß irgendeinem der vorhergehenden Ansprüche, wobei das Aufbringen von der Reaktionsmischung durch Sprühen durch das Anwenden einer Düse mit konstantem Fluss und Strahldicke erfolgt.

8. Verfahren gemäß irgendeinem der vorhergehenden Ansprüche, wobei das Substrat ausgewählt ist aus der Liste aus Löschpapier, Airlaid Papier, Vlies oder Webstoff.

9. Verfahren gemäß irgendeinem der vorhergehenden Ansprüche, wobei das Substrat bereitgestellt wird durch Zuführen des Substrats von einer Eintrittsspule in Richtung zu einer Austrittsspule, welche in einem Abstand von der Eintrittsspule angeordnet ist, und wobei das absorbierende Polymer auf das Substrat aufgebracht wird zwischen und in einem Abstand von der Eintritts- und der Austrittsspule.

10. Substrat, welches mit einer Beschichtung aus einem absorbieren Polymer versehen ist, welches durch das Verfahren gemäß irgendeinem der vorhergehenden Ansprüche erhältlich ist, wobei das Substrat ausgewählt ist aus der Liste aus Löschpapier, Airlaid Papier, Vlies oder Webstoff.

11. Verwendung eines Substrats gemäß Anspruch 10, wobei der Träger aufgebracht wird als absorbierendes Material in Inkontinenzprodukten, wie beispielsweise Windeln, Damenbinden oder absorbierenden Tüchern, wie beispielsweise Küchenrollen.

12. Verwendung eines Substrats gemäß Anspruch 10, wobei das Substrat in Produkten für Landwirtschaft und Gartenbau verwendet wird.

## Revendications

1. Procédé d'application d'un polymère absorbant sur un substrat, comprenant les étapes suivantes :
- la fourniture d'un substrat ;
- l'application d'un mélange réactionnel comprenant un monomère et un photoinitiateur de polymérisation formant des radicaux sur le substrat ; et
- le fait de provoquer la formation de radicaux dans le mélange réactionnel et ainsi d'initier la polymérisation du monomère sous l'influence d'une lumière,
dans lequel l'application du mélange réactionnel est effectuée par pulvérisation ; et dans lequel le mélange réactionnel est atomisé lors de la pulvérisation ;
dans lequel, après la polymérisation, le mélange réactionnel pulvérisé sera capable de gonfler et d'absorber des liquides
comprenant en outre l'étape d'évacuation du mélange réactionnel en excès lors de l'application du mélange réactionnel sur le substrat.

2. Procédé selon la revendication 1, dans lequel la lumière pour provoquer la formation de radicaux dans le mélange réactionnel et initier la polymérisation du monomère est une lumière ultraviolette.

3. Procédé selon la revendication 1 ou 2, dans lequel le monomère comprend un acide acrylique ou un composant ayant un groupe acide acrylique.

4. Procédé selon la revendication 3, dans lequel le monomère comprend :
- un premier monomère, qui est un monomère contenant un groupe acide acrylique de formule H₂C=CR₁R₂, dans lequel R₁ = H ou un groupe alkyle ayant 1 à 10 atomes de carbone, et R₂ = COOH, lequel monomère est neutralisé avec une base inorganique avant la polymérisation ; et
- un second monomère, qui est un composé sélectionné parmi a) un monomère contenant un groupe acide acrylique et ayant la formule H₂C=CR₃R₄, dans laquelle R₃ = H ou un groupe alkyle ayant 1 à 10 atomes de carbone et R₄ est un groupe alkylcarboxyle ayant 1 à 10 atomes de carbone et non égal à R₂, b) un monomère contenant un groupe acrylamide et ayant la formule H₂C = CR₃CONHR₅, dans laquelle R₃ est tel que défini ci-dessus et R₅ est un groupe alkyle ayant 1 à 10 atomes de carbone, c) un composé sélectionné dans le groupe constitué par le N,N-diméthylacrylamide, le désacétone-acrylamide, un méthoxy (polyéthylèneglycol)-méthacrylate, le sulfate d'ammonium méthacrylate d'éthyle, l'acétate de vinyle, la N-vinyl-2-pyrrolidone, le N-vinyl-N-méthylacétamide, le cyanure de vinyle, l'acide crotonique, le 3-amino-crotonamide, l'acrylate de 4-hydroxybutyle, le méthacrylate de 4-hydroxybutyle, l'acrylate d'hydroxypropyle, le méthacrylate d'hydroxypropyle, l'acrylate d'hydroxyéthyle et le méthacrylate d'hydroxyéthyle.

5. Procédé selon l'une quelconque des revendications précédentes, comprenant l'étape d'application de granules d'un polymère absorbant des liquides sur le substrat avant, pendant ou après l'application du mélange réactionnel sur le substrat.

6. Procédé selon la revendication 5, dans lequel les granulés sont préparés à partir du mélange réactionnel.

7. Procédé selon l'une quelconque des revendications précédentes, dans lequel l'application du mélange réactionnel par pulvérisation a lieu par l'application d'une buse avec un débit et une épaisseur de faisceau constants.

8. Procédé selon l'une quelconque des revendications précédentes, dans lequel le substrat est sélectionné dans la liste comprenant un papier buvard, un papier air-laid, un tissu non tissé ou tissé.

9. Procédé selon l'une quelconque des revendications précédentes, dans lequel le substrat est fourni en fournissant le substrat à partir d'une bobine d'entrée vers et sur une bobine de sortie, agencée à une certaine distance de la bobine d'entrée, et dans lequel le polymère absorbant est appliqué sur le substrat entre et à une certaine distance de la bobine d'entrée et de la bobine de sortie.

10. Substrat pourvu d'un revêtement d'un polymère absorbant pouvant être obtenu avec le procédé selon l'une quelconque des revendications précédentes, dans lequel le substrat est sélectionné dans la liste comprenant un papier buvard, un papier air-laid, un tissu non tissé ou tissé.

11. Utilisation d'un substrat selon la revendication 10, dans laquelle le support est appliqué en tant que matériau d'absorption dans des produits pour l'incontinence, tels que des couches, des serviettes hygiéniques ou des serviettes absorbantes telles que des essuie-tout.

12. Utilisation d'un substrat selon la revendication 10, dans laquelle le substrat est utilisé dans des produits pour l'agriculture et l'horticulture.
